# EUROPÄISCHE PATENTSCHRIFT

(11) **EP 0 683 593 B1**
(45) Veröffentlichungstag und Bekanntmachung des Hinweises auf die Patenterteilung: **02.10.2002**
(21) Anmeldenummer: 95107046.5
(22) Anmeldetag: 10.05.1995
(51) Int. Cl.: H04M 19/00, H04Q 3/62

(54) **Telekommunikationsanlage mit Energiesparmodus**
Energy saving mode in telecommunications equipment
Equipement de télécommunications avec fonction d'économie d'énergie

(30) Priorität: 20.05.1994 DE 4417780
(43) Veröffentlichungstag der Anmeldung: 22.11.1995
(73) Patentinhaber: SIEMENS AKTIENGESELLSCHAFT, 80333 München (DE)
(72) Erfinder: Kleffner, Werner, D-33178 Borchen (DE)

(56) Entgegenhaltungen:
- EP-A- 0 346 568
- EP-A- 0 572 872
- DE-A- 3 123 618
- US-A- 4 539 437
- US-A- 5 017 799
- PATENT ABSTRACTS OF JAPAN vol. 016, no. 525 (P-1446), 28. Oktober 1992 (1992-10-28) & JP 04 195619 A (HITACHI LTD), 15. Juli 1992 (1992-07-15)

## Beschreibung

Die Erfindung betrifft eine Telekommunikationsanlage mit zumindest einer Steuereinrichtung und mit zumindest einer Energieversorgungseinrichtung.

Eine derartige Telekommunikationsanlage ist beispielsweise aus der Druckschrift "ISDN in the Office - HICOM", Special issue of telecom report and Siemens Magazine Com, (1985) bekannt. Die Telekommunikationsanlage ist durch eine zentrale Steuereinrichtung, durch ein Koppelnetz sowie durch periphere Teilnehmeranschlußmodule und Serviceeinheiten gebildet. An die Teilnehmeranschlußmodule sind analoge oder digitale Kommunikationsendgeräte anschließbar. Derartige Telekommunikationsanlagen sind aufgrund der hohen Verfügbarkeitsanforderungen ständig in Betrieb und weisen folglich einen kontinuierlichen, hohen Energieverbrauch auf.

Aus dem Dokument US 4539437 ist ein Telekommunikationssystem bekannt, bei dem angeschlossene Endgeräte zur Reduzierung des Energieverbrauchs standardmäßig in einen energieverbrauchsreduzierten Energiesparmodus versetzt sind. Die Endgeräte werden nur dann in einen "normalen Energiemodus" versetzt, wenn vordefinierte äußere Ereignisse, wie z.B. ein Abheben des Hörers oder ein eingehender Ruf, auftreten. Auf diese Weise können jedoch viele Arten zur Energieeinsparung nicht abgedeckt werden.

Die der Erfindung zugrunde liegende Aufgabe ist darin zu sehen, den Energieverbrauch von Telekommunikationsanlagen zu reduzieren. Die Aufgabe wird ausgehend von einer Telekommunikationsanlage gemäß den Merkmalen des Oberbegriffs des Patentanspruchs 1 durch dessen kennzeichnende Merkmale gelöst.

Ein wesentlicher Aspekt der erfindungsgemäßen Telekommunikationsanlage ist darin zu sehen, daß zusätzliche Steuermittel und die Steuereinrichtung der Telekommunikationsanlage derart ausgestaltet sind, daß bei Vorliegen von Energiesparinformationen zumindest ein Teilbereich der Telekommunikationanlage in zumindest einen energieverbrauchreduzierten Energiesparmodus gesteuert wird. Als Teilbereiche der Telekommunikationsanlage sind insbesondere Teilbereiche der Teilnehmeranschlußmodule sowie Komponenten oder Teilbereiche der Komponenten anzusehen, die nach einer Steuerung in einen energieverbrauchreduzierten Energiesparmodus wieder in einen normalen Betriebsmodus steuerbar sind. Unter bestimmten Voraussetzungen ist auch eine annähernd vollständige Steuerung der Telekommunikationsanlage in einen Energiesparmodus möglich.

Für die Bildung der Energiesparinformationen sind interne oder externe Mittel vorgesehen. Diese Energiesparinformationen sind durch eine den Startzeitpunkt und/oder durch eine den Endezeitpunkt eines energieverbrauchreduzierten Zustandes anzeigende Startzeitpunkt- und/oder Endezeitinformation repräsentiert.

Der Energiesparmodus für Teilbereiche der Telekommunikationsanlage wird mit Hilfe von zusätzlichen Mitteln vorteilhaft durch eine Steuerung des zumindest einen Teilbereichs in einen stromlosen Zustand - Anspruch 2 - in einem Standby-Zustand - Anspruch 3 - und durch Zustände bewirkt, bei dem die Teilbereiche mit reduzierten Speisespannungen - Anspruch 4 - oder mit reduzierten Taktgeschwindigkeiten betrieben werden - Anspruch 5. Bei diesen Ausgestaltungsvarianten sind die Steuermittel entsprechend auszubilden, d.h. durch entsprechende Schaltmittel und insbesondere für die Reduzierung der Speisespannung und der Taktgeschwindigkeiten durch entsprechende Regeleinrichtungen zu realisieren.

Gemäß einer weiteren vorteilhaften Ausgestaltung der erfindungsgemäßen Telekommunikationsanlage ist der Energiesparmodus mit Hilfe von zusätzlichen Mitteln derart realisiert, daß periphere Einrichtungen der Telekommunikationsanlage stromlos gesteuert werden - Anspruch 6. Periphere Einrichtungen von Telekommunikationsanlagen repräsentieren insbesondere Teilnehmeranschlußmodule, an die analoge oder digitale Kommunikationsendgeräte anschließbar sind. Aufgrund der hohen Anzahl dieser peripheren Einrichtungen ist deren Stromlosschaltung mit einer besonders hohen Energieverbrauchseinsparung verbunden.

Gemäß einer vorteilhaften Weiterbildung der erfindungsgemäßen Telekommunikationsanlage ist das interne oder externe Mittel zur Bildung von Energiesparinformationen durch eine Zeiteinrichtung realisiert - Anspruch 7. Eine derartige Zeiteinrichtung ist üblicherweise in Telekommunikationsanlagen verfügbar und wird lediglich um eine programmtechnisch realisierte Energiesparroutine ergänzt, mit deren Hilfe die Startzeitpunkt- und/oder Endezeitpunktinformationen gebildet werden. Durch die Startzeitpunkt- und Endezeitpunktinformationen ist ein Zeitbereich definiert, in dem die Telekommunikationsanlage in einen Energiesparmodus gesteuert wird. Dieser Zeitbereich liegt beispielsweise in Nachtstunden oder in Wochenenden , in dem lediglich einzelne Anschlüsse für die Übermittlung von beispielsweise Telefaxinformationen aktiv geschaltet bleiben. Die Zeiteinrichtung kann vorteilhaft in einer übergeordneten zentralen Betriebsstelle angeordnet sein und die gebildeten Startzeitpunkt- und/oder Endezeitpunktinformationen werden an die betreffenden Kommunikationsanlagen übermittelt - Anspruch 8. Die Betriebsstelle stellt beispielsweise eine Fernbetriebs- und Wartungseinrichtung eines öffentlichen oder privaten Kommunikationsnetzes dar, in der beispielsweise während der Nachtstunden oder Wochenenden Startzeitpunkt- und/oder Endezeitpunktinformationen gebildet und an die dieser Betriebsstelle zugeordneten Telekommunikationsanlagen übermittelt werden. Mit Hilfe dieser Startzeitpunkt- und/oder Endezeitpunktinformationen können in den betreffenden Kommunikationsanlagen beispielsweise Teilbereiche der peripheren Einrichtungen in einen stromlosen oder einen Standby-Modus gesteuert werden. Alternativ bzw. zusätzlich ist eine Reduzierung der Taktgeschwindigkeiten der die Telekommunikationsanlage taktende Taktsignale oder eine Reduzierung der Betriebsspannungen für wesentliche Bereiche vorteilhaft.

Gemäß einer weiteren vorteilhaften Ausgestaltung der erfindungsgemäßen Telekommunikationsanlage werden die Startzeitpunkt- und Endezeitpunktinformationen in einem Personalzeiterfassungssystem in Abhängigkeit von der An- oder Abwesenheit der den Kommunikationsendgeräten zugeordneten Teilnehmern gebildet und an die betreffende Kommunikationsanlage übermittelt - Anspruch 9. Bei dieser vorteilhaften Ausgestaltung ist ein Personalzeiterfassungssystem in die Telekommunikationsanlage einbezogen. Mit Hilfe des Personalzeiterfassungssystems wird die Abwesenheit bzw. Anwesenheit der einem Kommunikationsgerät zugeordneten Teilnehmer festgestellt. Die Anwesenheitsprüfung wird beispielsweise durch Abtasten von Magnetstreifen von Ausweisen durchgeführt. Ist beispielsweise ein oder sind mehrere einem Teilnehmeranschlußmodul zugeordnete Teilnehmer oder einer Teilnehmergruppe abwesend, so wird eine Startzeitpunktinformation gebildet und an die Telekommunikationsanlage übermittelt. In dieser wird das betreffende Teilnehmeranschlußmodul in einen Energiesparmodus gesteuert, beispielsweise durch Reduzieren der Betriebsspannung. Wird die Anwesenheit eines Teilnehmers oder eines Teilnehmers der Gruppe festgestellt, so wird eine Endezeitpunktinformation gebildet und an die Kommunikationsanlage übermittelt, worauf in dieser die betreffenden Teilbereiche der Kommunikationsanlage in den Normalbetrieb gesteuert werden.

Gemäß einer weiteren vorteilhaften Ausgestaltung der erfindungsgemäßen Telekommunikationsanlage wird die Startpunkt- oder Endezeitpunktinformation in Abhängigkeit von den von den Kommunikationsendgeräten übermittelten An- oder Abmeldeinformationen gebildet - Anspruch 11. Hierbei wird beispielsweise bei einem vorgesehenen Entfernen des Teilnehmers vom Kommunikationsendgerät nach einer Eingabe durch den Teilnehmer in diesem eine Abmeldeinformation gebildet und an die Telekommunikationsanlage übermittelt. Daraufhin wird in dieser der dem betreffenden Kommunikationsanschluß zugeordnete Teilbereich in einen Energiesparmodus gesteuert. Analog hierzu wird eine periphere Einrichtung, z.B. ein Teilnehmeranschlußmodul in einen Energiesparmodus gesteuert, sofern von den dieser peripheren Einrichtung zugeordneten Gruppe von Kommunikationsendgeräten jeweils eine Abmeldeinformation gebildet und übermittelt wurde - Anspruch 12. Durch die Steuerung der jeweiligen Anschlußeinheiten in einen Energiesparmodus, beispielsweise durch weitgehendes Abschalten der Energieversorgung, sind erhebliche Energieeinsparungen erzielbar.

Im folgenden wird die erfindungsgemäße Telekommunikationsanlage anhand einer figürlichen Darstellung näher erläutert.

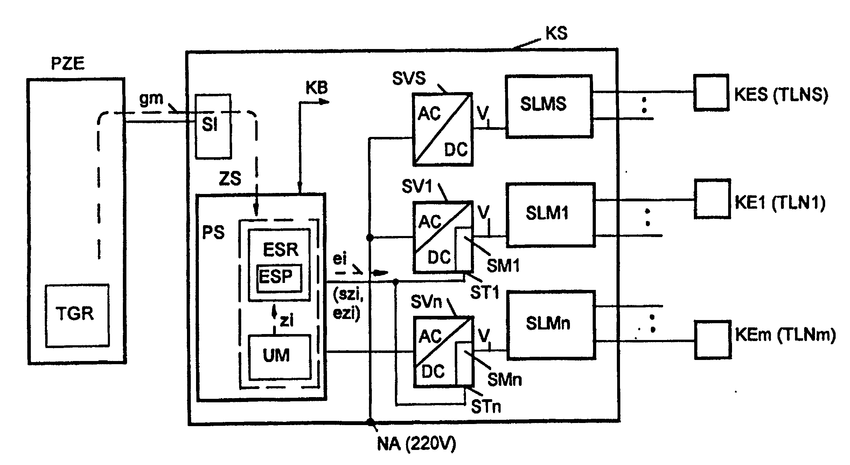

Die FIG zeigt eine Telekommunikationsanlage KS, die durch eine zentrale Steuerung ZS sowie durch Teilnehmeranschlußmodule SLM1..n, S gebildet ist. Der Nachrichten- und Signalisierungsinformationsaustausch zwischen diesen Komponenten der Telekommunikationsanlage KS wird über einen Kommunikationsbus KB bewirkt - in der Figur durch eine mit KB bezeichnete Verbindung angedeutet. Für das Ausführungsbeispiel sei angenommen, daß diesen Teilnehmeranschlußmodulen SLM1..n, S jeweils eine Stromversorgung SV1..n, S zugeordnet ist. Die Stromversorgungen SV1..n, S sind über entsprechende Verbindungen an einen 220 Volt-Netzanschluß NA geführt, über den die Telekommunikationsanlage KS mit Energie versorgt wird. In den Stromversorgungen SV1..n, S werden die Wechselspannungen AC des 220 Volt-Netzanschlusses NA in Gleichspannungen DC umgesetzt. Die Anzahl und die Höhe der Gleichspannungen DC ist auf die Erfordernisse der Teilnehmeranschlußmodule SLM1..n, S abgestimmt.

Für das Ausführungsbeispiel sei weiterhin angenommen, daß jeweils Kommunikationsendgeräte KE1..n an die Teilnehmeranschlußmodule SLM1..n anschließbar sind, die in einen Energiesparmodus steuerbar sind und weitere Kommunikationsendgeräte KES an ein weiteres Teilnehmeranschlußmodul SLMS anschließbar sind, das nicht in einen Energiesparmodus gesteuert werden darf. Die weiteren Kommunikationsendgeräte KES stellen insbesondere Kommunikationsendgeräte KES dar, die ständig in Betrieb gehalten werden müssen, z.B. Faximileeinrichtungen oder Notrufeinrichtungen. In den Stromversorgungen SV1..n, denen jeweils in einen Energiesparmodus steuerbare Teilnehmeranschlußmodule SLM1..n zugeordnet sind, sind jeweils Steuermittel SM1..n vorgesehen, mit deren Hilfe die Gleichspannungen DC abgeschaltet bzw. wesentlich erniedrigt werden können. Die Steuermittel SM1..3 enthalten beispielsweise elektronische Stellglieder, z.B. Transistoren oder alternativ Relais. Die Steuermittel SM1..n weisen jeweils einen Steueranschluß ST1..n auf, die einzeln oder wie in der Fig. dargestellt zusammengefaßt mit der zentralen Steuerung ZS verbunden sind.

In der zentralen Steuereinrichtung ZS, die beispielsweise durch ein Mikroprozessorsystem SAB 80386 der Fa. Siemens realisiert ist, ist im Programmspeicher PS eine Energiesparroutine ESR vorgesehen. Für die zeitliche Steuerung der Energiesparroutine ESR ist in den Programmspeicher PS desweiteren ein Uhrenmodul UM integriert. In diesem üblicherweise vorhandenen Uhrenmodul UM werden aktuelle Zeitinformationen zi gebildet und an Komponenten des Kommunikationssystems KS, auch an die Energiesparroutine ESR, übermittelt. Mit Hilfe der Energiesparroutine ESP werden zu vorgegebenen Zeitpunkten, die in einem Energiesparspeicher ESP hinterlegt sind, Startzeitpunkt- und/oder Endezeitpunktinformationen szi, ezi gebildet und jeweils an eine oder wie in der FIG dargestellt an alle in einen Energiesparmodus steuerbare Stromversorgungen SV1..n übermittelt. Diese Startzeitpunkt- und/oder Endezeitpunktinformationen szi,ezi stellen die Einstellinformationen ei für die Stromversorgungen SV1..n dar. Mit Hilfe dieser Einstellinformationen ei werden die Stromversorgungen SV1..n sowohl in einen Energiesparmodus gesteuert - durch die Startzeitpunktinformation szi - als auch in den Normalbetriebszustand umgeschaltet - durch die Endezeitpunktinformation ezi. Die Einstellinformationen ei sind im günstigsten Realisierungsfall durch zwei Spannungspegel realisiert, die den Energiesparmodus oder den Normalbetriebmodus dem jeweiligen Steuermittel SM1..n anzeigen.

Durch die Steuerung der Teilnehmeranschlußmodule SLM1..n in den Energiesparmodus kann beispielsweise bei einer Telekommunikationsanlage bei einer täglichen Abschaltung der Gleichspannung DC insbesondere in den Nachtstunden eine jährliche Energieeinsparung von 2000 kW/h erzielt werden, was einer Reduzierung des Energieverbrauchs von ca. 25% entspricht. Weitere Einsparungspotentiale sind darin zu sehen, daß die Telekommunikationsanlage KS an den Wochenenden in einen Energiesparmodus gesteuert wird.

Eine effizientere Steuerung der Telekommunikationsanlage KS in einen Energiesparmodus läßt sich durch den Anschluß eines Personalzeiterfassungssystems PZE erzielen. Mit Hilfe eines Personalzeiterfassungssystems PZE wird im wesentlichen durch Erfassungsgeräte, wie z.B. Ausweisleser usw., die Anwesenheit bzw. die Abwesenheit von den Kommunikationsendgeräten KE1..n zugeordneten Teilnehmern TLN1..n erfaßt. Durch eine im Personalzeiterfassungssystem PZE implementierte Teilnehmergruppenroutine TGR kann die Abwesenheit bzw. Anwesenheit von Teilnehmern TLN1..m festgestellt werden, die jeweils einem Teilnehmeranschlußmodul SLM1..n zugeordnet sind. Wird die Abwesenheit aller an ein Teilnehmeranschlußmodul SLM1..n angeschlossenen Teilnehmer TLN1..m festgestellt, so wird in der Teilnehmergruppenroutine TGR eine Gruppenmeldung gm gebildet und an die Zentralsteuerung ZS der Telekommunikationsanlage KS übermittelt. Hierzu ist das Personalzeiterfassungssystem PZE über eine Verbindungsleitung VL mit einer Schnittstelleneinrichtung SE der Telekommunikationsanlage KS verbunden. In der Zentralsteuerung ZS wird die Gruppenmeldung gm an die Energiesparroutine ESR gesteuert und in dieser in Abhängigkeit von dem Informationsinhalt der Gruppenmeldung gm eine Einstellinformation ei gebildet, an das betreffende Teilnehmeranschlußmodul SLM1..n übermittelt und mit Hilfe des Steuermittels SM1..n wird dieses in einen Energiesparmodus gesteuert. Analog hierzu wird durch eine Gruppenmeldung gm die Anwesenheit zumindest eines Teilnehmers TLN1..n gemeldet, deren zugeordnetes Kommunikationsendgerät KE1..n bzw. Teilnehmeranschlußmodul SLM1..n in einen Energiesparmodus gesteuert ist. Durch diese Gruppenmeldung gm wird folglich das betreffende Teilnehmeranschlußmodul SLM1..n wieder in den Normalbetriebszustand gesteuert. Durch den Anschluß eines Personalzeiterfassungssystems können folglich die jeweiligen Teilnehmeranschlußmodule SLM1..n gezielt bei Abwesenheit der zugeordneten Teilnehmer TLN1..m in einen Energiesparmodus unabhängig von der Tageszeit gesteuert werden. Hierdurch sind weitere Energieeinsparungen möglich.

## Patentansprüche

1. Telekommunikationsanlage (KS) mit zumindest einer Steuereinrichtung (ZS) und mit zumindest einer Energieversorgungseinrichtung (SV1..n, S), wobei
- interne oder externe Mittel (UM, ESR, PZE) zur Bildung von Energiesparinformationen (ei) vorgesehen sind, und
- zusätzliche Steuermittel (SM1..n) und die zumindest eine Steuereinrichtung (ZS) derart ausgestaltet sind, daß bei Vorliegen von Energiesparinformationen (ei) zumindest ein Teilbereich (SLM1..n) der Telekommunikationsanlage (KS) in einen energieverbrauchreduzierten Energiesparmodus gesteuert wird,
**dadurch gekennzeichnet,**
- **daß** die Energiesparinformationen (ei) durch eine den Startzeitpunkt und/oder durch eine den Endezeitpunkt eines energieverbrauchreduzierten Zustandes anzeigende Startzeitpunkt- und/oder Endezeitpunktinformation (szi, ezi) repräsentiert sind.

2. Telekommunikationsanlage nach Anspruch 1,
**dadurch gekennzeichnet,**
**daß** der energieverbrauchreduzierte Zustand mit Hilfe von zusätzlichen Mitteln (SM1..n) derart realisiert ist, daß Teilbereiche (SLM1..n) der Telekommunikationsanlage (KS) in einen stromlosen Zustand steuerbar sind.

3. Telekommunikationsanlage nach Anspruch 1,
**dadurch gekennzeichnet,**
**daß** der energieverbrauchreduzierte Zustand mit Hilfe von zusätzlichen Mitteln (SM1..n) derart realisiert ist, daß Teilbereiche (SLM1..n) der Telekommunikationsanlage (KS) in einen Standby-Zustand steuerbar sind.

4. Telekommunikationsanlage nach Anspruch 1,
**dadurch gekennzeichnet,**
**daß** der energieverbrauchreduzierte Zustand mit Hilfe von zusätzlichen Mitteln (SM1..n) derart realisiert ist, daß Teilbereiche (SLM1..n) der Telekommunikationsanlage (KS) mit reduzierten Speisespannungen (DC) betreibbar sind.

5. Telekommunikationsanlage nach Anspruch 1,
**dadurch gekennzeichnet,**
**daß** der energieverbrauchreduzierte Zustand mit Hilfe von zusätzlichen Mitteln (SM1..n) derart realisiert ist, daß Teilbereiche (SLM1..n) der Telekommunikationsanlage (KS) mit Taktsignalen mit reduzierten Taktgeschwindigkeiten betrieben werden.

6. Telekommunikationsanlage nach Anspruch 1,
**dadurch gekennzeichnet,**
**daß** der energieverbrauchreduzierte Zustand mit Hilfe von zusätzlichen Mitteln (SM1..n) derart realisiert ist, daß periphere Einrichtungen (SLM1..n) der Telekommunikationsanlage (KS) stromlos gesteuert werden.

7. Telekommunikationsanlage nach einem der vorhergenden Ansprüche,
**dadurch gekennzeichnet,**
**daß** das interne oder externe Mittel (UM, ESR, PZE) zur Bildung von Energiesparinformationen (ei) in der Telekommunikationsanlage (KS) durch eine Energiesparroutine (ESR) und durch eine Zeiteinrichtung (UM) realisiert ist.

8. Telekommunikationsanlage nach Anspruch 7,
**dadurch gekennzeichnet,**
**daß** die Zeiteinrichtung (UM) und die Energiesparroutine (ESR) in einer übergeordneten zentralen Betriebsstelle angeordnet sind und die gebildeten Startzeitpunkt- und/oder Endezeitpunktinformationen (szi, ezi) an die betreffenden Telekommunikationsanlagen (KS) übermittelt werden.

9. Telekommunikationsanlage nach einem der vorhergehenden Ansprüche,
**dadurch gekennzeichnet,**
**daß** ein Personalzeiterfassungssystem (PZE) vorgesehen ist, das derart ausgestaltet ist, daß die Startzeitpunkt- und Endezeitpunktinformationen (szi, ezi) in Abhängigkeit von der An- oder Abwesenheit der den Kommunikationsendgeräten (KE) zugeordneten Teilnehmern (TLN1..m) gebildet und an die betreffende Telekommunikationsanlage (KS) übermittelt werden.

10. Telekommunikationsanlage nach Anspruch 9,
**dadurch gekennzeichnet,**
**daß** das Personalzeiterfassungssystem (PZE) derart ausgestaltet ist, daß die Startzeitpunkt- und/oder Endezeitpunktinformationen (szi, ezi) in Abhängigkeit von der Ab- oder Anwesenheit
- der einer peripheren Einrichtung (SLM1..n) zugeordneten Teilnehmergruppe (TLN) und/oder
- aller Teilnehmer (TLN)
gebildet werden.

11. Telekommunikationsanlage nach einem der vorhergehenden Ansprüche,
**dadurch gekennzeichnet,**
**daß** die Telekommunikationsanlage (KS) derart ausgestaltet ist, daß die Startzeitpunkt- oder Endezeitpunktinformationen (szi, ezi) in Abhängigkeit von der von den Kommunikationsendgeräten (KE) übermittelten An- oder Abmeldeinformationen gebildet werden.

12. Telekommunikationsanlage nach Anspruch 11,
**dadurch gekennzeichnet,**
**daß** die Telekommunikationsanlage (KS) derart ausgestaltet ist, daß die Startzeitpunkt- und Endezeitpunktinformationen (szi, ezi) in Abhängigkeit von der von einer Gruppe von Kommunikationsendgeräten (KE) übermittelten An- oder Abmeldeinformationen gebildet werden, wobei die Gruppe von Kommunikationsendgeräten (KE1..m) zumindest einer peripheren Einrichtung SLM1..n)) zugeordnet ist.

## Claims

1. Telecommunications system (KS) having at least one control device (ZS) and having at least one power supply device (SV1..n, S), with
- internal or external means (UM, ESR, PZE) being provided in order to form power saving information (ei), and
- additional control means (SM1..n) and the at least one control device (ZS) being designed such that, when power saving information (ei) is present, at least one subregion (SLM1..n) of the telecommunications system (KS) is switched to a standby mode in which the power consumption is reduced,
**characterized**
- **in that** the power-saving information (ei) is represented by start time information (szi), which represents the start time, and/or by end time information (ezi), which represents the end time, of a state in which the power consumption is reduced.

2. Telecommunications system according to Claim 1,
**characterized**
**in that** the state in which the power consumption is reduced is produced with the aid of additional means (SM1..n) such that subregions (SLM1..n) of the telecommunications system (KS) can be switched to a state in which no current flows.

3. Telecommunications system according to claim 1,
**characterized in that** the state in which the power consumption is reduced is produced with the aid of additional means (SM1..n), such that subregions (SLM1..n) of the telecommunications system (KS) can be switched to a standby state.

4. Telecommunications system according to Claim 1,
**characterized**
**in that** the state in which the power consumption is reduced is produced with the aid of additional means (SM1..n), such that subregions (SLM1..n) of the telecommunications system (KS) can be operated with reduced supply voltages (DC).

5. Telecommunications system according to Claim 1,
**characterized**
**in that** the state in which the power consumption is reduced is produced with the aid of additional means (SM1..n), such that subregions (SLM1..n) of the telecommunications system (KS) are operated with clock signals at reduced clock rates.

6. Telecommunications system according to Claim 1,
**characterized**
**in that** the state in which the power consumption is reduced is produced with the aid of additional means (SM1..n) such that peripheral devices (SLM1..n) of the telecommunications system (KS) are controlled without using electrical current.

7. Telecommunications system according to one of the preceding claims,
**characterized**
**in that** the internal or external means (UM, ESR, PZE) for forming powersaving information (ei) in the telecommunications system (KS) are provided by an energy saving routine (ESR) and by a timing device (UM).

8. Telecommunications system according to Claim 7,
**characterized**
**in that** the timing device (UM) and the energy saving routine (ESR) are arranged in a higher-level central control point, and the start time and/or end time information (szi, ezi) which is formed is transmitted to the relevant telecommunications systems (KS).

9. Telecommunications system according to one of the preceding claims,
**characterized**
**in that** a personal time recording system (PZE) is provided, which is designed such that the start time and end time information (szi, ezi) is formed and is transmitted to the relevant telecommunications system (KS) as a function of the presence or absence of the subscribers (TLN1..m) associated with the communications terminals (KE).

10. Telecommunications system according to Claim 9,
**characterized**
**in that** the personal time recording system (PZE) is designed such that the start time and/or end time information (szi, ezi) is formed as a function of the presence or absence
- of the subscriber group (TLN) associated with one peripheral device (SLM1..n), and/or
- all the subscribers (TLN).

11. Telecommunications system according to one of the preceding claims,
**characterized**
**in that** the telecommunications system (KS) is designed such that the start time or end time information (szi, ezi) is formed as a function of the logging-on or logging-off information transmitted from the communications terminals (KE).

12. Telecommunications system according to Claim 11,
**characterized**
**in that** the telecommunications system (KS) is designed such that the start time and end time information (szi, ezi) is formed as a function of the logging-on or logging-off information transmitted from a group of communications terminals (KE), with the group of communications terminals (KE1..m) being associated with at least one peripheral device (SLM1..n).

## Revendications

1. Equipement de télécommunication (KS) avec au moins un dispositif de commande (ZS) et avec au moins un dispositif d'alimentation en énergie (SV1..n, S),
- des moyens internes ou externes (UM, ESR, PZE) étant prévus pour la formation d'informations d'économie d'énergie (ei), et
- des moyens supplémentaires de commande (SM1..n) et d'au moins un dispositif de commande (ZS) étant exécutés de telle sorte, qu'en présence d'informations d'économie d'énergie (ei), au moins une partie (SLM1..n) de l'équipement de télécommunication (KS) est commandée dans un mode de consommation d'énergie réduite,
**caractérisé en ce que**,
- les informations d'économie d'énergie (ei) sont représentées par une information du moment de départ et/ou par une information du moment de la fin (szi, ezi) indiquant le moment du départ et/ou le moment de la fin d'un état de consommation d'énergie réduite.

2. Equipement de télécommunication selon la revendication 1,
**caractérisé en ce que**
l'état de consommation d'énergie réduite est réalisé à l'aide de moyens supplémentaires (SM1..n), de telle manière que des parties (SLM1..n) de l'équipement de télécommunication (KS) sont commandables dans un état sans courant.

3. Equipement de télécommunication selon la revendication 1,
**caractérisé en ce que**
l'état de consommation d'énergie réduite est réalisé à l'aide de moyens supplémentaires (SM1..n), de telle manière que des parties (SLM1..n) de l'équipement de télécommunication (KS) sont commandables dans un état de veille.

4. Equipement de télécommunication selon la revendication 1,
**caractérisé en ce que**
l'état de consommation d'énergie réduite est réalisé à l'aide de moyens supplémentaires (SM1..n), de telle manière que des parties (SLM1..n) de l'équipement de télécommunication (KS) peuvent être mises en fonction avec des tensions d'alimentation (DC) réduites.

5. Equipement de télécommunication selon la revendication 1,
**caractérisé en ce que**
l'état de consommation d'énergie réduite est réalisé à l'aide de moyens supplémentaires (SM1..n), de telle manière que des parties (SLM1..n) de l'équipement de télécommunication (KS) sont mises en fonction avec des signaux de rythme ayant des vitesses de rythme réduites.

6. Equipement de télécommunication selon la revendication 1,
**caractérisé en ce que**
l'état de consommation d'énergie réduite est réalisé à l'aide de moyens supplémentaires (SM1..n), de telle manière que des dispositifs périphériques (SLM1..n) de l'équipement de télécommunication (KS) sont commandés sans courant.

7. Equipement de télécommunication selon l'une des revendications précédentes,
**caractérisé en ce que**
le moyen interne ou externe (UM, ESR, PZE) pour la formation d'informations d'économie d'énergie (ei) dans l'équipement de télécommunication (KS) est réalisé par une routine d'économie d'énergie (ESR) et par un dispositif de temps (UM).

8. Equipement de télécommunication selon la revendication 7,
**caractérisé en ce que**
le dispositif de temps (UM) et la routine d'économie d'énergie (ESR) sont disposés dans un poste d'exploitation central supérieur, et que les informations du moment de départ et/ou les informations du moment de la fin (szi, ezi) formées sont transmises aux équipements de télécommunication concernés (KS).

9. Equipement de télécommunication selon l'une des revendications précédentes,
**caractérisé en ce que**
un système de saisie de temps de personnel (PZE) est prévu, qui est exécuté de telle manière que les informations du moment de départ et les informations du moment de la fin (szi, ezi) sont formées en fonction de la présence ou de l'absence des abonnés (TLN1..m) affectés aux appareils terminaux de communication (KE) et sont transmises à l'équipement de télécommunication (KS).

10. Equipement de télécommunication selon la revendication 9,
**caractérisé en ce que**
le système de saisie de temps de personnel (PZE) est exécuté de telle manière que les informations du moment de départ et les informations du moment de la fin (szi, ezi) sont formées en fonction de la présence ou de l'absence
- du groupe d'abonnés (TLN) affecté à un équipement périphérique (SLM1..n) et/ou
- de tous les abonnés (TLN).

11. Equipement de télécommunication selon l'une des revendications précédentes,
**caractérisé en ce que**
l'équipement de télécommunication (KS) est exécuté de telle manière que les informations du moment de départ ou les informations du moment de la fin (szi, ezi) sont formées en fonction des informations de demande ou de clôture transmises par les appareils terminaux de communication (KE).

12. Equipement de télécommunication selon la revendication 11,
**caractérisé en ce que**
l'équipement de télécommunication (KS) est exécuté de telle manière que les informations du moment de départ et les informations du moment de la fin (szi, ezi) sont formées en fonction des informations de demande ou de clôture transmises par un groupe d'appareils terminaux de communication (KE), le groupe d'appareils terminaux de communication (KEE1..m) étant affecté à au moins un dispositif périphérique (SLM1..n).
